# EUROPÄISCHE PATENTSCHRIFT

(11) **EP 2 978 041 B1**
(45) Veröffentlichungstag und Bekanntmachung des Hinweises auf die Patenterteilung: **01.03.2017**
(21) Anmeldenummer: 14178176.5
(22) Anmeldetag: 23.07.2014
(51) Int. Cl.: H01M 2/02, H01M 2/30, H01M 2/36

(54) **Batterie mit flüssigem Elektrolyten und Herstellungsverfahren**
Battery with liquid electrolytes and method of manufacture
Batterie à électrolyte liquide et procédé de fabrication

(43) Veröffentlichungstag der Anmeldung: 27.01.2016
(73) Patentinhaber: VARTA Microbattery GmbH, 73479 Ellwangen (DE)
(72) Erfinder: Gaugler, Winfried, 73479 Ellwangen-Eigenzell (DE)
(74) Vertreter: Patentanwaltskanzlei Cartagena

(56) Entgegenhaltungen:
- GB-A- 191 002 300
- JP-A- H0 256 852
- US-A- 1 460 969
- US-A- 2 542 094
- US-A1- 2004 058 235
- US-A1- 2005 106 455
- US-B2- 8 765 279

## Beschreibung

Die im Folgenden beschriebene Erfindung betrifft eine Batterie mit einer als Hohlzylinder ausgebildeten, einen Hohlraum definierenden positiven Elektrode und einer in dem Hohlraum angeordneten Elektrode entgegengesetzter Polarität.

Der Begriff "Batterie" meinte ursprünglich mehrere in Serie geschaltete elektrochemische Zellen. Heute werden jedoch sehr häufig auch unter einzelnen elektrochemischen Zellen (Einzelzellen) Batterien verstanden.

Bei Batterien der eingangs genannten Bauart handelt es sich häufig um Zellen, bei denen ein Alkalimetall, insbesondere Lithium, als Aktivmaterial in der negativen Elektrode verwendet wird. Beispiele für Batterien mit negativer Lithium-Elektrode sind die Lithium-Thionylchlorid-Batterie, die Lithium-Schwefeldioxid-Batterie, die Lithium-Kohlenstoffmonofluorid-Batterie, die Lithium-Eisensulfid-Batterie und die Lithium-Mangandioxid-Batterie. Als positive Elektroden kommen im Fall der letztgenannten Lithium-Mangandioxid-Batterie Mangandioxid-Elektroden, Eisendisulfid-Elektroden im Fall einer Lithium-Eisensulfid-Batterie und im Fall einer Lithium-Schwefeldioxid-Batterie in Acetonitril gelöstes Schwefeldioxid (absorbiert in einer Inertelektrode) zum Einsatz. Die positiven Elektroden sind dabei in vielen Fällen als Hohlzylinder ausgebildet. Im Inneren der positiven Elektrode ist die negative Lithium-Elektrode angeordnet, ummantelt von einem Separator, der die positive Elektrode von der negativen Elektrode trennt, dabei jedoch einen Ionentransport zwischen den beiden Elektronen zulässt. Der Ionentransport wird dabei in der Regel durch Einsatz eines geeigneten Elektrolyten gewährleistet. Für Batterien mit Lithium-Elektroden eignen sich insbesondere Elektrolyte, bei denen ein Salz wie beispielsweise Lithium-Hexafluorophosphat in einem organischen Lösungsmittel, beispielsweise in einem Carbonat, gelöst ist.

Die elektrische Kontaktierung der positiven Elektrode stellt in der Regel kein Problem dar. Üblicherweise steht ihre Außenseite direkt mit der Innenwand eines elektrisch leitenden Batteriegehäuseteils in Kontakt. Die elektrische Kontaktierung kann entsprechend über dieses Gehäuseteil erfolgen. Aufwändiger ist dagegen die Kontaktierung der negativen Elektrode. Hierfür kommt klassisch ein Stift zum Einsatz, der an einem Ende konisch zugespitzt ist und am anderen Ende einen Flansch trägt, der bei der Gehäuseabdichtung eine Rolle spielt. Ein typisches Beispiel für einen solchen Stromableiter findet sich in der DE 32 40 806 A1.

Die in der DE 32 40 806 A1 dargestellten Stromableiter sind sehr teuer, da sie auf Drehmaschinen spanend hergestellt werden müssen.

Aus der US 2004/0058235 A1, der US 1460969 A, der US 2005/0106455 A1, der GB 02300 A A.D. 1910 und der JP H0256852 A sind schraubenförmige bzw. schraubenartige Stromableiter für Batterien bekannt.

Aus der US 8765279 B2 ist es bekannt, ein Gehäuse einer Sekundärbatterie über eine Öffnung in einem Deckblech mit einem Elektrolyten zu befüllen. Die Öffnung wird nach dem Befüllen mit einer Kugel verschlossen.

Der vorliegenden Erfindung lag die Aufgabe zugrunde, die aus der DE 32 40 806 A1 bekannten Stromableiter für die negativen Elektroden von Batterien der genannten Konstruktion durch billigere zu ersetzen und dadurch die Produktionskosten von Lithium-Batterien insgesamt zu senken. Zudem sollte der Gesamtprozess der Herstellung optimiert werden.

Diese Aufgabe wird gelöst durch die Batterie mit den Merkmalen des Anspruchs 1. Bevorzugte Ausführungsformen der erfindungsgemäßen Batterie sind in den abhängigen Ansprüchen 2 bis 14 angegeben. Weiterhin trägt auch das Verfahren mit den Merkmalen des Anspruchs 15 zur Lösung der Aufgabe bei. Der Wortlaut sämtlicher Ansprüche wird hiermit durch Bezugnahme zum Inhalt der vorliegenden Beschreibung gemacht.

Eine erfindungsgemäße Batterie umfasst wie die eingangs beschriebenen gattungsgemäßen Batterien stets eine als Hohlzylinder ausgebildete, einen Hohlraum definierende positive Elektrode sowie eine negative Elektrode, die den Hohlraum mindestens teilweise ausfüllt. Die positive Elektrode weist eine außenliegende Mantelfläche auf. Zwischen der positiven und der negativen Elektrode ist ein Separator angeordnet. Umschlossen werden die positive Elektrode samt der in dem Hohlraum angeordneten negativen Elektrode und dem Separator von einem Gehäuse, das einen Innenraum umschließt, in dem die positive Elektrode samt der in dem Hohlraum angeordneten negativen Elektrode und dem Separator angeordnet sind.

Zur elektrischen Kontaktierung der Elektroden ist für die positive Elektrode ein erster Stromableiter vorgesehen, für die negative Elektrode ein zweiter Stromableiter. Als erster Stromableiter für die positive Elektrode dient ein Teil des Gehäuses, das sie umschließt. Als zweiter Stromableiter für die negative Elektrode ist erfindungsgemäß ein Stift vorgesehen, der auf seiner Außenseite ein Gewinde trägt. Dieser ersetzt die aus dem Stand der Technik bekannten, an einem Ende konisch zugespitzten Stift mit dem Flansch am Ende.

Der verwendete Stift weist an einem Ende einen Kopf sowie aus diesem heraustretend einen das Gewinde tragenden Schaft auf. Der Schaft ist bevorzugt in dem Hohlraum angeordnet, der von der positiven Elektrode gebildet wird und der mindestens teilweise mit der negativen Elektrode ausgefüllt ist. Besonders bevorzugt liegt der Schaft zentral in der Achse des Hohlzylinders, wobei der Kopf stirnseitig aus dem Hohlzylinder herausragt. Der das Gewinde tragende Schaft steht bevorzugt in unmittelbarem Kontakt zur zweiten Elektrode. Besonders bevorzugt ist zumindest der das Gewinde tragende Bereich des Schafts, vorzugsweise vollständig, mit Elektrodenmaterial bedeckt. Hierzu kann man beispielsweise flüssiges Lithium bereitstellen, den Schaft darin eintauchen und das Lithium erkalten lassen, so dass es den Schaft mantelartig umschließt. Es ist aber auch möglich, den Schaft mit dem Gewinde in festes metallisches Lithium einzudrehen. Der aus dem Hohlzylinder herausragende Kopf ist hingegen in aller Regel frei von Elektrodenmaterial.

Unter einem Gewinde versteht man bekanntlich eine profilierte Einkerbung, die fortlaufend und wendelartig in einer Schraubenlinie um einen meist zylinderförmigen Grundkörper - hier den erwähnten Stift - verläuft. Die Kerbe wird als Gewindegang bezeichnet.

Bevorzugt besteht der Stift aus Stahl und weist einen bevorzugt geschlossenen Überzug aus Nickel oder aus einer Nickellegierung auf.

Besonders zeichnet sich der zweite Stromableiter weiterhin dadurch aus, dass er mindestens eine Bohrung aufweist, die dazu geeignet ist, den Innenraum, in dem die positive Elektrode samt der in dem Hohlraum angeordneten negativen Elektrode und dem Separator angeordnet sind, mit Elektrolyt zu befüllen. Die erfindungsgemäße Batterie umfasst nämlich weiterhin einen flüssigen Elektrolyten, mit dem die Elektroden und der Separator getränkt sind. Es hat sich als besonders vorteilhaft erwiesen, diesen über die mindestens eine Bohrung in den Innenraum einzudosieren, aber hierzu später noch mehr.

Der Kopf des Stiftes weist bevorzugt eine Ober- und eine Unterseite auf. In Weiterbildung ist es bevorzugt, dass der Schaft auf der Unterseite aus dem Kopf heraustritt und die Oberseite flach ausgebildet ist.

In besonders bevorzugten Ausführungsformen weist die flache Oberseite eine Vertiefung auf, insbesondere eine Vertiefung mit zentrischer Geometrie. Besonders bevorzugt handelt es sich bei der Vertiefung um ein Formelement zum formschlüssigen Kontakt mit einem Werkzeug. Bei der Vertiefung handelt es sich also bevorzugt um einen Innenangriff. Als Formelemente kommen beispielsweise ein Schlitz oder ein kreuzförmiger Schlitz in Frage. Weitere Varianten möglicher Formelemente sind insbesondere ein Innenmehrkant, insbesondere ein Innensechskant, oder ein Innenvielzahn (XZN). Der Innenangriff weist entsprechend in bevorzugten Ausführungsformen einen polygonen Querschnitt, insbesondere einen sechseckigen Querschnitt, auf.

Es ist in der Regel vorgesehen, dass die mindestens eine Bohrung auf der Oberseite in den Kopf eintritt. Bevorzugt tritt die mindestens eine Bohrung durch einen Boden oder eine Seitenwand der in die flache Oberseite eingebrachten Vertiefung in den Kopf ein. Besonders bevorzugt tritt die mindestens eine Bohrung durch den Boden eines Innenangriffs mit polygonem Querschnitt in den Kopf ein.

Die Austrittsöffnung oder die Austrittsöffnungen der mindestens einen Bohrung befinden sich bevorzugt an der Unterseite des Kopfes, beispielsweise neben dem Schaft. Es ist allerdings auch denkbar, dass die mindestens eine Bohrung ein kurzes Stück durch den Schaft geführt ist und diesen beispielsweise an seinem Ansatz durchstößt.

Im Betriebszustand muss die erfindungsgemäße Batterie flüssigkeitsdicht verschlossen sein, damit Elektrolyt nicht aus dem Innenraum auslaufen kann. Bevorzugt ist zu diesem Zweck die mindestens eine Bohrung mittels eines Verschlusselements flüssigkeitsdicht blockiert. Bei dem Verschlusselement kann es sich beispielsweise um einen Stopfen oder Pfropfen aus Kunststoff handeln, der beispielsweise aus einem Schmelzklebstoff gebildet wurde. Bevorzugt besteht das Verschlusselement jedoch aus Metall. Geeignet sind insbesondere metallische Verschlusselemente, die sich passgenau in die erwähnte Vertiefung auf der flachen Oberseite des Kopfes einfügen und die sich mit dem Kopf durch Verschweißung verbinden lassen.

Zu seinem freien, dem Kopf entgegengesetzten Ende hin ist der Schaft in aller Regel konisch ausgebildet.

Gegenüber den aus dem Stand der Technik bekannten Stromableitern haben die erfindungsgemäß verwendeten gewindetragenden Stifte den Vorteil, dass sie - aufgrund des Gewindes - eine größere Kontaktfläche zu der von ihnen kontaktierten Elektrode aufweisen. Im Hinblick auf die Strombelastbarkeit der erfindungsgemäßen Batterie stellt dies einen großen Vorteil dar.

Im Hinblick auf die der Erfindung zugrundeliegende Aufgabe wirkt sich vorteilhaft aus, dass Stifte mit Gewinde und einem Innenmehrkant in nahezu allen denkbaren Größen und Formvarianten im Handel erhältlich sind, nämlich in Form von handelsüblichen Schrauben. Als Befestigungselemente sind Schrauben bereits seit hunderten von Jahren bekannt. Erfindungsgemäß gut geeignet sind beispielsweise metallische Holzschrauben, die bekanntlich meist schwach konisch ausgebildet sind und die sich beim Eindrehen in Holz ihre Gegengewinde selbst schneiden. Zu einem Einsatz im Rahmen der vorliegenden Erfindung bedarf es lediglich geringfügiger Modifikationen, nämlich des Einbringens der mindestens einen Bohrung. Diese kann beispielsweise mittels eines Laserstrahls in die Schrauben eingebracht werden.

Das Gehäuse einer erfindungsgemäßen Batterie besteht in der Regel aus mehreren Einzelteilen. Üblicherweise umfasst es
- ein erstes becherförmiges Gehäuseteil mit einem stirnseitigen Gehäuseboden, einem umlaufenden Gehäusemantel und einer dem Gehäuseboden gegenüberliegenden stirnseitigen Öffnung,
- ein zweites, die stirnseitige Öffnung des ersten Gehäuseteils verschließendes Gehäuseteil sowie
- eine elektrisch isolierende Dichtung, die zwischen dem ersten und dem zweiten Gehäuseteil angeordnet ist.

Die außenliegende Mantelfläche der hohlzylindrisch ausgebildeten positiven Elektrode liegt in der Regel flächig an der Innenseite des umlaufenden Gehäusemantels an. Dadurch soll ein möglichst großflächiger elektrischer Kontakt zwischen der Elektrode und dem Gehäusemantel gewährleistet werden. Es ist bevorzugt, dass das erste, becherförmige Gehäuseteil als positiver Abgriffspol der erfindungsgemäßen Batterie fungiert.

Insbesondere aus produktionstechnischen Gründen wird die als Hohlzylinder ausgebildete positive Elektrode in aller Regel nicht einstückig in das becherförmige Gehäuseteil eingebracht, sondern in Form von einzelnen Segmenten, die zusammengesetzt die positive Elektrode bilden. Beispielsweise können in dem becherförmigen Zellgehäuse zwei oder mehr ringförmige Segmente aufeinander gestapelt werden. Der Innendurchmesser der ringförmigen Segmente bestimmt dann das Volumen und den Durchmesser des Hohlraums für die negative Elektrode. Der Außendurchmesser der ringförmigen Segmente ist in der Regel exakt auf den entsprechenden Innendurchmesser des becherförmigen ersten Gehäuseteils abgestimmt. Die einzelnen ringförmigen Segmente grenzen dabei über erste Kontaktflächen flächig aneinander. Darüber hinaus liegen sie über zweite Kontaktflächen an der Innenseite des umlaufenden Gehäusemantels an. Bevorzugt ist das zweite Gehäuseteil scheibenförmig ausgebildet und weist eine Ober- und eine Unterseite auf. Die Unterseite bildet dabei gleichzeitig die Gehäuseinnenseite, begrenzt also den Innenraum des Gehäuses. Besonders bevorzugt weist das zweite Gehäuseteil eine Durchbrechung auf, durch welche die mindestens eine Bohrung von außerhalb des Gehäuses zugänglich ist. Hierzu ist in bevorzugten Ausführungsformen der Kopf des Stiftes mit seiner flachen Oberseite an die Unterseite des zweiten Gehäusehalbteils geschweißt, so dass eine in die flache Oberseite des Kopfes eingebrachte Vertiefung wie der erwähnte Innenmehrkant unmittelbar unter der Durchbrechung angeordnet ist, so dass die Vertiefung durch die Durchbrechung hindurch zugänglich ist.

Es ist somit bevorzugt, dass das zweite Gehäuseteil eine Innenseite aufweist, die mit dem zweiten Stromableiter, insbesondere mit dem Kopf des zweiten Stromableiters, in elektrisch leitendem Kontakt steht. Bevorzugt fungiert das zweite Gehäuseteil als negativer Abgriffspol der erfindungsgemäßen Batterie.

Wie bereits aus den einleitenden Ausführungen der Anmeldung hervorgeht, handelt es sich bei der erfindungsgemäßen Batterie bevorzugt um eine Lithium-Batterie. Es weist bevorzugt eine Lithium-Elektrode als negative Elektrode auf. Grundsätzlich ist das Prinzip der Verwendung des beschriebenen schraubenförmigen Stromableiters aber auch für andere Zelltypen einsetzbar. Als Beispiel sind Alkali-Mangan-Batterien zu nennen, die häufig ebenfalls eine Konstruktion mit einer hohlzylindrischen positiven Elektrode und einer innerhalb des Hohlzylinders angeordneten negativen Elektrode konstruiert werden. Die negative Elektrode besteht bei Alkali-Mangan-Batterien meist aus einer Zinkpaste, die ebenfalls mittels eines schraubenförmigen Stromableiters kontaktiert werden kann.

Das erfindungsgemäße Verfahren trägt insoweit zur Lösung der der Erfindung zugrunde liegenden Aufgabe bei, als es sehr stark zur Optimierung des Gesamtprozesses der Herstellung gattungsgemäßer Batterien beitragen kann. Stets weist das Verfahren die folgenden Schritte auf:
- Anordnen einer als Hohlzylinder ausgebildeten, einen Hohlraum definierenden positiven Elektrode mit einer außenliegenden Mantelfläche, einer den Hohlraum mindestens teilweise ausfüllenden negativen Elektrode, sowie eines die Elektroden trennenden Separators im Innenraum eines Gehäuses und
- Tränken der Elektroden und des Separators mit einem flüssigen Elektrolyten.

Gemäß der vorliegenden Erfindung ist als Stromableiter für die negative Elektrode ein Stift vorgesehen, der mindestens eine Bohrung aufweist. Diese dient dazu, den Innenraum mit Elektrolyt zu befüllen. Erfindungsgemäß wird der Elektrolyt zur Tränkung der Elektroden und des Separators somit über die Bohrung in den Innenraum eindosiert.

Mit dieser Vorgehensweise sind zahlreiche Vorteile verbunden. Das Eindosieren kann erfolgen, nachdem das Gehäuse der Batterie bereits verschlossen wurde. So lässt sich verhindern, dass der Elektrolyt bei der Montage verunreinigt wird.

Besonders bevorzugt, wird der Elektrolyt eindosiert, indem man in dem verschlossenen Gehäuse über die mindestens eine Bohrung zunächst einen Unterdruck erzeugt und anschließend den Elektrolyten mittels des erzeugten Unterdrucks in den Innenraum einsaugt. Die eingesaugte Menge lässt sich sogar über den Unterdruck steuern.

Bevorzugte Ausführungsformen aller im Rahmen des erfindungsgemäßen Verfahrens einsetzbaren Bauteile, Baugruppen und Komponenten wurden bereits im Zusammenhang mit der erfindungsgemäßen Batterie beschrieben. Auf die entsprechenden Ausführungen wird hiermit Bezug genommen.

Die beschriebenen sowie weitere Merkmale der erfindungsgemäßen Batterie ergeben sich auch aus der nun folgenden Beschreibung der in der Zeichnung dargestellten bevorzugten Ausführungsform in Verbindung mit den Unteransprüchen. Dabei können einzelne Merkmale der Erfindung für sich allein oder in Kombination miteinander verwirklicht sein. Die beschriebenen Ausführungsformen dienen lediglich zur Erläuterung und zum besseren Verständnis der Erfindung und sind in keiner Weise einschränkend zu verstehen.

### Figurenbeschreibung

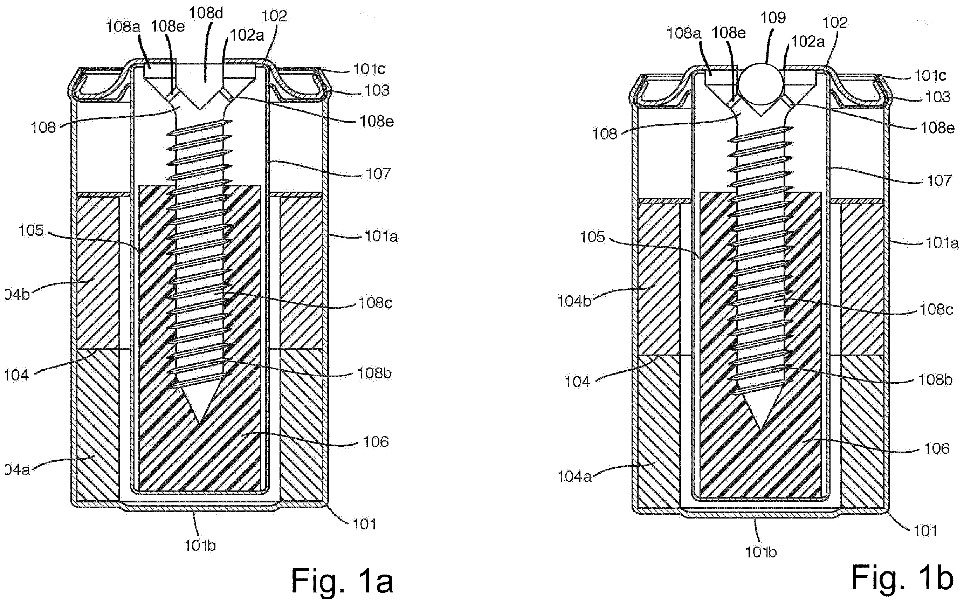

Die in **Fig. 1a** und **Fig. 1b** dargestellten schematischen Abbildungen (Längsschnitt) dienen der Erläuterung einer bevorzugten Ausführungsform einer erfindungsgemäßen Batterie **100.**

Die dargestellte Batterie weist ein becherförmiges Gehäuseteil **101** mit einem zylindrischen Mantel **101a** und einem ebenen, kreisförmig ausgebildeten Boden **101b** auf. Stirnseitig weist das Gehäuseteil **101** eine kreisrunde, dem Boden **101b** gegenüber liegende Öffnung auf. Diese ist mittels eines scheibenförmigen, radial profilierten Gehäuseteils **102** verschlossen. Hierzu ist der Öffnungsrand **101c** des Gehäuseteils **101** radial nach innen umgebogen, über den Rand des scheibenförmigen Gehäuseteils **102** hinweg, so dass dieses in axialer Richtung formschlüssig fixiert ist. Getrennt sind die Gehäuseteile **101** und **102** durch die aus einem elektrisch isolierenden Kunststoff bestehende Dichtung **103.**

An der Innenseite **101a** des Gehäuses liegt die als Hohlzylinder ausgebildete positive Elektrode **104** an, die aus zwei Einzelsegmenten **104a** und **104b** zusammengesetzt ist. Die Einzelsegmente **104a** und **104b** sind jeweils ringförmig ausgebildet und weisen einen jeweils identischen Außen- und Innendurchmesser auf. Innerhalb des Gehäuseteils **101** sind sie stapelförmig angeordnet und definieren in ihrem Zentrum den Hohlraum **105.** In diesem ist die negative Elektrode **106** angeordnet, die von einem becherförmigen Separator **107** umgeben ist. Letzterer trennt die Elektroden **104** und **106** voneinander.

Die innerhalb des Hohlraums **105** angeordnete negative Elektrode **106** wird durch den schraubenförmigen Stromableiter **108** kontaktiert. Dieser weist einen Kopf **108a** auf sowie einen ein Gewinde **108b** tragenden Schaft **108c.** Dieser steckt weitestgehend in der negativen Elektrode **106** und steht großflächig mit dieser in Kontakt. Die Oberseite des Kopfes **108a** liegt flach an der Innenseite des scheibenförmigen Gehäuseteils **102** an und ist mit dieser durch Verschweißung verbunden. Der Kopf **108a** weist einen Innenangriff in Form eines Innenmehrkants **108d** auf. Damit dieser von außen zugänglich ist, weist das Gehäuseteil **102** eine zentrale Durchbrechung auf, die durch den Öffnungsrand **102a** begrenzt wird. Der Innenmehrkant **108d** ist unmittelbar unter der Durchbrechung angeordnet. So sind auch die Bohrungen **108e** gut von außen zugänglich. Über diese Bohrungen **108e** kann Elektrolyt in das aus den Gehäuseteilen **101** und **102** gebildete Gehäuse eingefüllt werden. Nach dem Einfüllen des Elektrolyten werden die Bohrungen **108e** mittels eines Verschlusselements **109** flüssigkeitsdicht blockiert. Bei dem abgebildeten Verschlusselement **109** handelt es sich um eine Metallkugel, die in den Innenangriff eingeschweißt wurde. Die Verschweißung kann mittels eines Lasers erfolgen.

## Patentansprüche

1. Batterie, umfassend
• eine als Hohlzylinder ausgebildete, einen Hohlraum definierende positive Elektrode mit einer außenliegenden Mantelfläche,
• eine negative Elektrode, die den Hohlraum mindestens teilweise ausfüllt,
• einen zwischen der positiven und der negativen Elektrode angeordneten Separator,
• einen flüssigen Elektrolyten, mit dem die Elektroden und der Separater getränkt sind,
• einen ersten Stromableiter für die positive und einen zweiten Stromableiter für die negative Elektrode sowie
• ein Gehäuse, das einen Innenraum umschließt, in dem die positive Elektrode samt der in dem Hohlraum angeordneten negativen Elektrode und dem Separator angeordnet sind,
wobei
• ein Teil des Gehäuses als erster Stromableiter für die positive Elektrode dient und
• als zweiter Stromableiter für die negative Elektrode ein Stift vorgesehen ist, der einen Kopf aufweist sowie aus diesem heraustretend einen ein Gewinde tragenden Schaft,
**dadurch gekennzeichnet, dass**
• der zweite Stromableiter mindestens eine Bohrung aufweist, die dazu geeignet ist, den Innenraum mit Elektrolyt zu befüllen.

2. Batterie nach Anspruch 1, **dadurch gekennzeichnet, dass** der Kopf eine Ober- und eine Unterseite aufweist, wobei der Schaft auf der Unterseite aus dem Kopf heraustritt und die Oberseite flach ausgebildet ist.

3. Batterie nach Anspruch 2, **dadurch gekennzeichnet, dass** die flache Oberseite eine Vertiefung aufweist, insbesondere eine Vertiefung mit zentrischer Geometrie.

4. Batterie nach einem der vorhergehenden Ansprüche, **dadurch gekennzeichnet, dass** es sich bei der Vertiefung um ein Formelement zum formschlüssigen Kontakt mit einem Werkzeug handelt.

5. Batterie nach einem der Ansprüche 2 bis 4, **dadurch gekennzeichnet, dass** die mindestens eine Bohrung auf der Oberseite in den Kopf eintritt, insbesondere durch einen Boden oder eine Seitenwand der in die flache Oberseite eingebrachten Vertiefung geführt ist.

6. Batterie nach einem der Ansprüche 2 bis 5, **dadurch gekennzeichnet, dass** die mindestens eine Bohrung auf der Unterseite aus dem Kopf austritt, insbesondere neben dem Schaft.

7. Batterie nach einem der vorhergehenden Ansprüche, **dadurch gekennzeichnet, dass** die mindestens eine Bohrung mittels eines Verschlusselements flüssigkeitsdicht blockiert ist.

8. Batterie nach einem der vorhergehenden Ansprüche, **dadurch gekennzeichnet, dass** der Schaft in dem Hohlraum angeordnet ist, vorzugsweise zentral in der Achse des Hohlzylinders, und der Kopf stirnseitig aus dem Hohlzylinder herausragt.

9. Batterie nach einem der vorhergehenden Ansprüche, **dadurch gekennzeichnet, dass** der Schaft zu seinem freien Ende hin konisch ausgebildet ist.

10. Batterie nach einem der vorhergehenden Ansprüche, **dadurch gekennzeichnet, dass** das Gehäuse
• ein erstes, becherförmiges Gehäuseteil mit einem stirnseitigen Gehäuseboden, einem umlaufenden Gehäusemantel und einer dem Gehäuseboden gegenüberliegenden stirnseitigen Öffnung sowie
• ein zweites, die stirnseitige Öffnung des ersten Gehäuseteils verschließendes Gehäuseteil sowie
• eine elektrisch isolierende Dichtung, die zwischen dem ersten und dem zweiten Gehäuseteil angeordnet ist,
aufweist.

11. Batterie nach Anspruch 10, **dadurch gekennzeichnet, dass** die außenliegende Mantelfläche der hohlzylindrisch ausgebildeten positiven Elektrode flächig an der Innenseite des umlaufenden Gehäusemantels anliegt.

12. Batterie nach einem der Ansprüche 10 oder 11, **dadurch gekennzeichnet, dass** sich die positive Elektrode aus mindestens zwei ringförmigen Einzelsegmenten zusammensetzt, die über erste Kontaktflächen flächig aneinandergrenzen und über zweite Kontaktflächen an der Innenseite des umlaufenden Gehäusemantels anliegen.

13. Batterie nach einem der Ansprüche 2 bis 12, **dadurch gekennzeichnet, dass** das zweite Gehäuseteil scheibenförmig ausgebildet ist und eine (zentrale) Durchbrechung aufweist, durch welche die mindestens eine Bohrung von außerhalb des Gehäuses zugänglich ist.

14. Batterie nach einem der vorhergehenden Ansprüche, **dadurch gekennzeichnet, dass** es sich bei der negativen Elektrode um eine Lithium-Elektrode handelt.

15. Verfahren zur Herstellung einer Batterie, bei dem eine als Hohlzylinder ausgebildete, einen Hohlraum definierende positive Elektrode mit einer außenliegenden Mantelfläche, eine negative Elektrode, die den Hohlraum mindestens teilweise ausfüllt und ein zwischen der positiven und der negativen Elektrode angeordneter Separator im Innenraum eines Gehäuses angeordnet und mit einem flüssigen Elektrolyt getränkt werden, **dadurch gekennzeichnet, dass** als Stromableiter für die negative Elektrode ein Stift vorgesehen ist, der einen Kopf sowie aus diesem heraustretend einen ein Gewinde tragenden Schaft sowie mindestens eine Bohrung aufweist, und der Elektrolyt zur Tränkung der Elektroden und des Separators über die Bohrung in den Innenraum eindosiert wird.

## Claims

1. Battery comprising
• a positive electrode which is in the form of a hollow cylinder, defines a hollow space and has an external casing surface,
• a negative electrode which at least partially fills the hollow space,
• a separator which is arranged between the positive electrode and the negative electrode,
• a liquid electrolyte with which the electrodes and the separator are impregnated,
• a first current collector for the positive electrode and a second current collector for the negative electrode, and also
• a housing which surrounds an interior space in which the positive electrode together with the negative electrode, which is arranged in the hollow space, and the separator are arranged,
wherein
• a portion of the housing serves as a first current collector for the positive electrode and
• a pin is provided as the second current collector for the negative electrode, the said pin having a head and also a stem which protrudes out of the said head and has a thread,
**characterized in that**
• the second current collector has at least one bore which is suitable for filling the interior space with electrolyte.

2. Battery according to Claim 1, **characterized in that** the head has a top side and a bottom side, wherein the stem protrudes out of the head on the bottom side and the top side is flat.

3. Battery according to Claim 2, **characterized in that** the flat top side has a recess, in particular a recess with a central geometry.

4. Battery according to one of the preceding claims, **characterized in that** the recess is a shaped element for interlocking contact with a tool.

5. Battery according to one of Claims 2 to 4, **characterized in that** the at least one bore enters the head on the top side, in particular is routed through a base or a side wall of the recess which is made in the flat top side.

6. Battery according to one of Claims 2 to 5, **characterized in that** the at least one bore exits from the head on the bottom side, in particular next to the stem.

7. Battery according to one of the preceding claims, **characterized in that** the at least one bore is blocked in a liquid-tight manner by means of a closure element.

8. Battery according to one of the preceding claims, **characterized in that** the stem is arranged in the hollow space, preferably centrally in the axis of the hollow cylinder, and the head protrudes out of the end side of the hollow cylinder.

9. Battery according to one of the preceding claims, **characterized in that** the shank is of conical design in the direction of its free end.

10. Battery according to one of the preceding claims, **characterized in that** the housing has
• a first, cup-like housing portion with an end-side housing base, a circumferential housing casing and an end-side opening which is situated opposite the housing base, and also
• a second housing portion which closes the end-side opening of the first housing portion and also
• an electrically insulating seal which is arranged between the first and the second housing portion.

11. Battery according to Claim 10, **characterized in that** the external casing surface of the positive electrode which is of hollow-cylindrical design bears areally against the inside of the circumferential housing casing.

12. Battery according to either of Claims 10 and 11, **characterized in that** the positive electrode is composed of at least two annular individual segments which areally adjoin one another by means of first contact areas and bear against the inside of the circumferential housing casing by means of second contact areas.

13. Battery according to one of Claims 2 to 12, **characterized in that** the second housing portion is of disk-like design and has a (central) aperture through which the at least one bore is accessible from outside the housing.

14. Battery according to one of the preceding claims, **characterized in that** the negative electrode is a lithium electrode.

15. Method for producing a battery, in which method a positive electrode which is in the form of a hollow cylinder, defines a hollow space and has an external casing surface, a negative electrode which at least partially fills the hollow space, and a separator which is arranged between the positive and the negative electrode are arranged in the interior space of a housing and are impregnated with a liquid electrolyte, **characterized in that** a pin is provided as the current collector for the negative electrode, the said pin having a head and also a stem, which protrudes out of the said head and has a thread, and also at least one bore, and the electrolyte for impregnating the electrodes and the separator is metered into the interior space by means of the bore.

## Revendications

1. Batterie, comprenant
- une électrode positive définissant une cavité se présentant sous la forme d'un cylindre creux, laquelle électrode est pourvue d'une surface enveloppante se trouvant à l'extérieur ;
- une électrode négative qui remplit la cavité, tout au moins en partie ;
- un séparateur disposé entre l'électrode positive et l'électrode négative ;
- un électrolyte liquide dont les électrodes et le séparateur sont imprégnés ;
- un premier conducteur électrique pour l'électrode positive et un deuxième conducteur électrique pour l'électrode négative ; ainsi que
- un boîtier qui entoure une chambre intérieure, au sein de laquelle l'électrode positive, ainsi que l'électrode négative disposée dans la cavité, et le séparateur sont disposés,
où
- une partie du boîtier sert de premier conducteur électrique pour l'électrode positive et
- une goupille est prévue comme deuxième conducteur électrique pour l'électrode négative, laquelle goupille présente une tête ainsi qu'une tige supportant un filetage et dépassant de la tête,
**caractérisée en ce que**
- le deuxième conducteur électrique présente au moins un perçage, lequel est adapté pour remplir la chambre intérieure avec l'électrolyte.

2. Batterie selon la revendication 1, **caractérisée en ce que** la tête présente une partie supérieure et une partie inférieure, où la tige dépasse de la tête sur la partie inférieure et où la partie supérieure est conçue de manière plate.

3. Batterie selon la revendication 2, **caractérisée en ce que** la partie supérieure plate présente un renfoncement, en particulier un renfoncement avec une géométrie centrique.

4. Batterie selon l'une des revendications précédentes, **caractérisée en ce que** le renfoncement en question est un élément moulé destiné à assurer un contact par complémentarité de formes avec un outil.

5. Batterie selon l'une des revendications 2 à 4, **caractérisée en ce que** l'au moins un perçage sur la partie supérieure pénètre dans la tête, et, en particulier, est guidé à travers un fond ou une paroi latérale du renfoncement mis en place dans la partie supérieure plate.

6. Batterie selon l'une des revendications 2 à 5, **caractérisée en ce que** l'au moins un perçage sort de la tête au niveau de la partie inférieure, en particulier à côté de la tige.

7. Batterie selon l'une des revendications précédentes, **caractérisée en ce que** l'au moins un perçage est obturé de manière étanche aux liquides au moyen d'un élément de fermeture.

8. Batterie selon l'une des revendications précédentes, **caractérisée en ce que** la tige est disposée dans la cavité, de préférence en position centrale dans l'axe du cylindre creux, et la tête dépasse en dehors du cylindre creux par le côté frontal.

9. Batterie selon l'une des revendications précédentes, **caractérisée en ce que** la tige est conçue en forme de cône en allant vers son extrémité.

10. Batterie selon l'une des revendications précédentes, **caractérisée en ce que** le boîtier présente :
- une première partie de boîtier en forme de gobelet, avec un fond de boîtier se trouvant du côté frontal, une enveloppe de boîtier périphérique et une ouverture se trouvant du côté frontal et située à l'opposé du fond du boîtier ; ainsi que
- une deuxième partie de boîtier obturant l'ouverture, se trouvant du côté frontal, de la première partie du boîtier ; ainsi que
- une garniture étanche, électriquement isolante, qui est disposée entre la première partie de boîtier et la deuxième partie de boîtier.

11. Batterie selon la revendication 10, **caractérisée en ce que** la surface enveloppante, se trouvant à l'extérieur, de l'électrode positive se présentant sous la forme d'un cylindre creux vient s'appliquer sur la surface de la face intérieure de l'enveloppe périphérique du boîtier.

12. Batterie selon l'une des revendications 10 ou 11, **caractérisée en ce que** l'électrode positive se compose d'au moins deux segments individuels circulaires qui sont contigus au niveau de la surface par l'intermédiaire de premières surfaces de contact et qui reposent sur la face intérieure de l'enveloppe périphérique du boîtier par l'intermédiaire de deuxièmes surfaces de contact.

13. Batterie selon l'une des revendications 2 à 12, **caractérisée en ce que** la deuxième partie de boîtier est conçue en forme de disque et présente une percée (centrale) à travers laquelle l'au moins un perçage est accessible depuis l'extérieur du boîtier.

14. Batterie selon l'une des revendications précédentes, **caractérisée en ce que** l'électrode négative en question est une électrode au lithium.

15. Procédé destiné à la fabrication d'une batterie, pour laquelle une électrode positive définissant une cavité se présentant sous la forme d'un cylindre creux, laquelle électrode est pourvue d'une surface enveloppante se trouvant à l'extérieur, une électrode négative qui remplit la cavité, tout au moins en partie, et un séparateur disposé entre l'électrode positive et l'électrode négative sont disposés dans la chambre intérieure d'un boîtier et sont imprégnés d'un électrolyte liquide, **caractérisé en ce qu'**une goupille est prévue comme conducteur électrique pour l'électrode négative, laquelle goupille présente une tête ainsi qu'une tige supportant un filetage et dépassant de la tête, ainsi qu'au moins un perçage, et l'électrolyte destiné à l'imprégnation des électrodes et du séparateur est ajouté par doses, à travers le perçage, dans la chambre intérieure.
